# FASCICULE DE BREVET EUROPEEN

(11) **EP 1 662 306 B1**
(45) Date de publication et mention de la délivrance du brevet: **05.08.2009**
(21) Numéro de dépôt: 05111465.0
(22) Date de dépôt: 29.11.2005
(51) Int. Cl.: G02F 1/35

(54) **Filtre non linéaire d'impulsions femtosecondes à contraste élevé**
Nichtlinearer Filter von Femtosekundenimpulsen mit hohem Kontrast
High contrast non-linear femtosecond pulse filter

(30) Priorité: 30.11.2004 FR 0412694
(43) Date de publication de la demande: 31.05.2006
(73) Titulaire: THALES, 92200 Neuilly sur Seine (FR); CENTRE NATIONAL DE LA RECHERCHE SCIENTIFIQUE (CNRS), 75016 Paris (FR); Ecole Polytechnique DGAR, 91128 Palaiseau Cedex (FR); Ecole Nationale Supérieure de Techniques Avancées, 75015 Paris (FR)
(72) Inventeur: Albert, Olivier, 91400, ORSAY (FR); Etchepare, Jean, 91370, VERRIERES LE BUISSON (FR); Jullien, Aurélie, 75014, PARIS (FR); Cheriaux, Gilles, 94260, FRESNES (FR); Saltiel, Solomon, BG-1715,A, SOFIA (BG); Minkovski, Nikolay, 1734, SOFIA (BG)
(74) Mandataire: Esselin, Sophie

(56) Documents cités:
- HOMOELLE D ET AL: "Pulse contrast enhancement of high-energy pulses by use of a gas-filled hollow waveguide" OPTICS LETTERS OPT. SOC. AMERICA USA, vol. 27, no. 18, 15 septembre 2002 (2002-09-15), pages 1646-1648, XP002337992 ISSN: 0146-9592
- N. MINKOWSKI ET AL.: "Nonlinear polarization rotation and orthogonal polarization generation axperienced in a single-beam configuration" J. OPT. SOC. AM. B, vol. 21, no. 9, 9 septembre 2004 (2004-09-09), pages 1659-1664, XP008049906
- KALASHNIKOV M P ET AL: "Characterization of a nonlinear filter for the front-end of a high contrast double-CPA Ti:sapphire laser" OPTICS EXPRESS OPT. SOC. AMERICA USA, vol. 12, no. 21, 18 octobre 2004 (2004-10-18), XP002336463 ISSN: 1094-4087

## Description

L'invention concerne un filtre non linéaire d'impulsions femtosecondes à contraste temporel élevé et un générateur de telles impulsions.

Le domaine de l'invention est celui des lasers à impulsions ultracourtes (10⁻¹² à 10⁻¹⁵ secondes) et ultra-intenses, c'est-à-dire supérieures à 1 nanojoule.

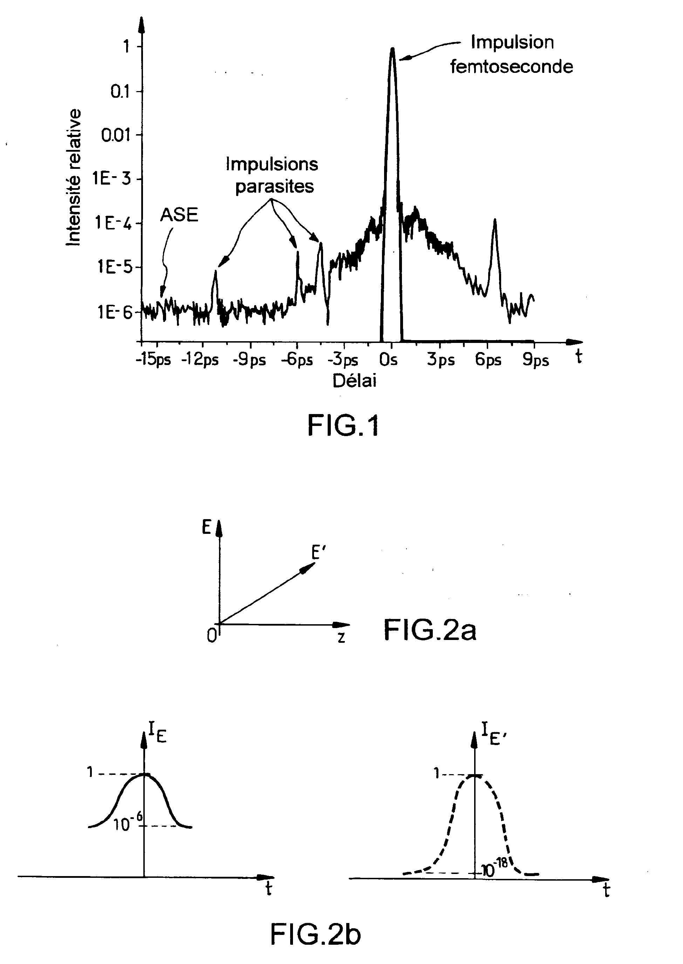

Typiquement, à titre d'exemple non limitatif, un laser haute puissance utilisant un cristal Ti:Al₂O₃, et basé sur un procédé d'amplification à dérive de fréquence (« CPA » ou Chirped Pulse Amplification en anglais), génère non seulement une impulsion femtoseconde mais aussi une émission spontanée amplifiée (« ASE » ou « Amplified Spontaneous Emission » en anglais) nanoseconde, ainsi que des impulsions parasites, comme illustré sur la courbe de la figure 1.

Une caractéristique importante de ces lasers est le contraste temporel défini par le rapport en intensité entre le piedestal d'ASE et l'impulsion femtoseconde. Pour des lasers de classe 100 TW, le contraste temporel atteint couramment 6 ordres de grandeur, c'est-à-dire 10⁻⁶.

Ce type de laser est par exemple utilisé pour les expériences d'interaction laser-matière. II est alors focalisé avec une intensité de 10²¹ Wcm⁻² sur une cible solide pour générer un plasma. Dans ce cas, l'ASE peut atteindre une intensité de 10¹⁴ Wcm⁻², qui est suffisante pour pré-ioniser la cible avant l'arrivée de l'impulsion femtoseconde. L'impulsion doit donc être nettoyée temporellement : il est nécessaire de supprimer les pré-impulsions et de baisser le niveau d'ASE d'au moins 3 ordres de grandeur. Pour ce type d'applications, il est important que le contraste temporel atteigne au moins 10⁻⁹.

Une solution pour améliorer le contraste temporel est présentée dans l'article « Pulse contrast enhancement of high-energy pulses by use of a gas-filled hollow waveguide » de D. Homoelle and al.

Dans le procédé décrit dans cet article, l'impulsion passe à travers une lame quart d'onde qui génère un faisceau à polarisation elliptique couplé par une lentille à un guide d'onde creux rempli de gaz. En sortie du guide d'onde le faisceau est collimaté par une autre lentille sur une autre lame quart d'onde dont l'axe rapide est orienté à 90° par rapport à celui de la première lame. Cet article relève de l'arrière-plan technologique.

Une autre solution pour améliorer le contraste temporel consiste à utiliser une technique de filtrage non linéaire, basée sur un processus de génération d'une onde polarisée orthogonalement dans un cristal non linéaire. Ce processus est lié à la susceptibilité optique non linéaire d'ordre 3 de cristaux cubiques : l'onde générée avec une polarisation orthogonale a la même longueur d'onde et est proportionnelle en intensité au cube de l'impulsion initiale, ce qui est illustré figures 2. On rappelle que l'intensité I_{E} d'un champ E est de la forme I_{E} = E.E*, E* étant le conjugué de E.

La direction du champ E en entrée du cristal et celle du champ E' en sortie, orthogonale à celle de E, sont représentées figure 2a ainsi que leur direction de propagation Oz. L'intensité I_{E} de E et l'intensité I_{E'} de E' représentées sur les courbes de la figure 2b illustrent la relation I_{E'}=k. I_{E} ³, k incluant la susceptibilité d'ordre 3. Les polarisations des champs apparaissent sur les courbes : les courbes en trait plein correspondent à la polarisation du champ incident, les courbes en pointillé à celle du champ converti, orthogonale à la précédente. Le contraste temporel passe ainsi théoriquement d'une valeur de 10⁻⁶ à 10⁻¹⁸.

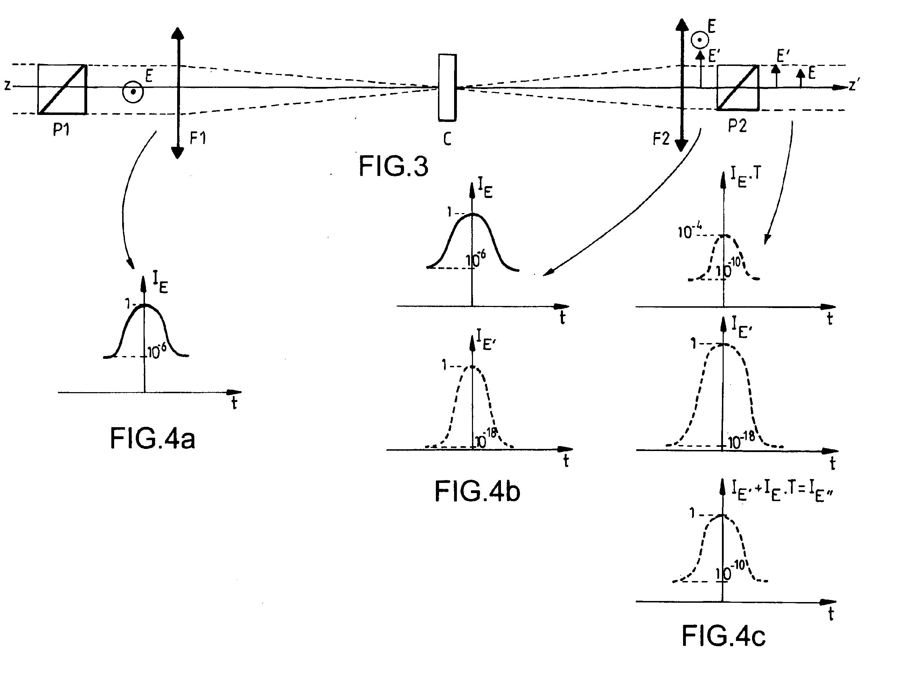

On a représenté figure 3a, un exemple d'un tel filtre non linéaire. L'axe z'z représente l'axe de propagation du champ électromagnétique. En entrée du filtre, l'impulsion à nettoyer est par exemple générée par un laser Ti:Al₂O₃ utilisant un amplificateur à dérive de fréquence (« CPA » ou Chirped Pulse Amplificator en anglais). Un premier polariseur P1 permet d'obtenir à partir de cette impulsion, un champ E polarisé rectilignement. Ce champ est focalisé au moyen d'un système optique de focalisation F1 sur un cristal C cubique c'est-à-dire ne présentant pas d'écart de vitesse de groupe entre le champ incident et le champ généré, tel qu'un cristal BaF₂ qui est en outre transparent sur une large gamme spectrale, de l'ultraviolet à l'infra-rouge. L'efficacité de conversion du cristal C est proportionnelle à : la longueur du cristal x intensité du champ incident au carré sur le cristal. Ce cristal C, d'une longueur d'environ 2 mm, convertit environ 10% du champ incident en un champ E' à polarisation rectiligne, orthogonale à celle de E. Environ 90% du champ incident est transmis par le cristal C sans être converti : ce champ non converti, de même polarisation que le champ incident est porteur de l'ASE. Ces champs sont collimatés par un deuxième système optique F2 et un deuxième polariseur P2 est prévu pour couper l'ASE et le champ non converti tout en transmettant 100% du champ E' converti.

Les figures 4 schématisent l'amélioration du contraste apportée par le filtre. Les polarisations sont indiquées de la même façon que sur les figures 2b. Soit I_{E} l'intensité du champ E incident sur le cristal C, représentée figure 4a. Après le cristal C et avant le polariseur P2, on représente figure 4b, le champ E' converti dont l'intensité I_{E}' présente un contraste de 10⁻¹⁸ et le résiduel non converti de I_{E}. Après P2, le signal filtré final I_{E}" se compose de I_{E}' transmis intégralement auquel s'ajoute le résiduel de I_{E} atténué du taux d'extinction T de P2, typiquement de 10⁻⁴ à 10⁻⁶. I_{E}" présente donc un contraste compris entre 10⁻¹⁰ et 10⁻¹² selon la valeur du taux d'extinction de P2.

La principale limitation de ce filtre est sa longévité et sa stabilité. En effet, le cristal se détériore au bout de quelques heures lorsqu'il est soumis à un champ incident E dont l'intensité est supérieure à 10¹² Wcm⁻² , intensité nécessaire pour obtenir un bon rendement du filtre.

Il existe une autre limitation de ce filtre liée à l'automodulation de phase. La haute valeur d'intensité nécessaire à un bon rendement du filtre génère aussi une modulation de la phase et de l'amplitude du spectre de l'impulsion femtoseconde, nommée SPM (self-phase modulation en anglais). La qualité de l'impulsion est donc dégradée et donc difficilement utilisable, lors d'une amplification ultérieure par exemple. De plus, cette SPM dégrade le profil temporel de l'impulsion, ce qui est nuisible au contraste final.

Un but important de l'invention est donc de réaliser un filtre fiable et robuste, résolvant les problèmes liés à la haute valeur d'intensité sur le cristal non linéaire, et permettant d'obtenir un faisceau de bonne qualité avec un contraste temporel élevé.

Pour atteindre ce but, l'invention propose un filtre optique non linéaire apte à transmettre une impulsion électromagnétique d'une durée inférieure à environ 1 picoseconde, qui est pourvu de moyens pour générer à partir de cette impulsion, un champ électromagnétique E à polarisation rectiligne, et d'un cristal C1 à géométrie cubique apte à générer à partir de E, un champ électromagnétique E'₁ à polarisation rectiligne, orthogonale à celle de E. Il est principalement **caractérisé en ce qu**'il comprend des moyens pour générer au moins un autre champ électromagnétique E'₂ capable de produire des interférences constructives avec le champ électromagnétique E'₁.

De cette manière le rendement final est conservé, tout en modérant la valeur d'intensité sur chacun des cristaux et en conservant un bon contraste temporel. Ceci permet de s'affranchir des limitations exposées précédemment.

Selon un premier mode de réalisation, les moyens pour générer E'₂ comportent au moins un autre cristal C2 à géométrie cubique apte à recevoir en entrée le champ E'₁ et à générer en sortie le champ E'₂.

De préférence, il comprend en outre des moyens pour former une image de C1 et l'autre cristal C2 coïncide avec l'image de C1.

Selon un autre mode de réalisation, les moyens pour générer E'₂ comportent le cristal C1 et un système optique apte à former l'image de C1 sur lui-même.

L'invention a aussi pour objet, un générateur d'impulsions électromagnétiques d'une durée inférieure à environ 1 picoseconde, équipé d'un oscillateur, **caractérisé en ce qu**'il comprend un filtre non linéaire tel que décrit précédemment.

II comprend éventuellement au moins un amplificateur, par exemple un amplificateur à dérive de fréquence.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement un exemple de profil temporel d'une impulsion femtoseconde,
les figures 2a et 2b déjà décrites représentent schématiquement respectivement la direction et l'intensité du champ E en entrée du cristal et celle du champ E' en sortie,
la figure 3 déjà décrite représente schématiquement un exemple d'un filtre non linéaire connu,
les figures 4a, 4b et 4c représentent schématiquement les intensités I_{E} du champ E en entrée (figure 4a), I_{E'} du champ E' converti et l'intensité du résiduel non converti de I_{E} en sortie du cristal C, avant le deuxième polariseur P2 (figure 4b) et l'intensité du résiduel de I_{E} atténué par P2 et les intensités I_{E'}, et I_{E"} après P2 (figure 4c),
la figure 5 représente schématiquement une première variante d'un premier mode de réalisation d'un filtre selon l'invention,
la figure 6 représente schématiquement une deuxième variante d'un premier mode de réalisation d'un filtre selon l'invention,
la figure 7 représente schématiquement un deuxième mode de réalisation d'un filtre selon l'invention,
la figure 8 représente schématiquement un troisième mode de réalisation d'un filtre selon l'invention,
la figure 9 représente schématiquement un générateur d'impulsions laser selon l'invention,
les figures 10a et 10b représentent schématiquement un exemple de CPA connu (figure 10a) ainsi que l'effet de chaque élément sur la courbe d'intensité de l'impulsion (figure 10b).

Le principe de l'invention consiste à obtenir au moins un deuxième champ E'₂, de manière à ce que le champ E'₁ généré par le cristal C1 et ce champ E'₂ produisent des interférences constructives. Cela revient à généraliser le principe du filtre décrit dans le préambule, à au moins deux cristaux, voire à un seul cristal dans une configuration multipassages.

Selon un premier mode de réalisation, ce deuxième champ E'₂ est généré par un deuxième cristal à géométrie cubique C2 qui reçoit en entrée le champ E'₁ converti par C1 et le champ E transmis par C1 sans être converti. C2 constitué du même matériau que C1, est orienté de manière à générer un champ E'₂ de même polarisation que le champ E'₁. Les champs E'₁ et E'₂ ont ainsi les mêmes propriétés temporelles. En outre C2 est situé sur l'image de C1 : les champs ont alors les mêmes propriétés spatiales et peuvent donc produire des interférences constructives.

De cette manière, l'intensité incidente sur chaque cristal est réduite par rapport au schéma à un cristal, pour le même rendement final. L'intensité sur chaque cristal étant réduite d'un facteur 2, la longévité des cristaux est préservée, l'automodulation de phase est réduite ; les qualités du faisceau sont ainsi conservées.

Ce premier mode de réalisation d'un filtre optique non linéaire 3 comporte plusieurs variantes.

Dans la suite, d'une figure à l'autre, les mêmes éléments présentent les mêmes références.

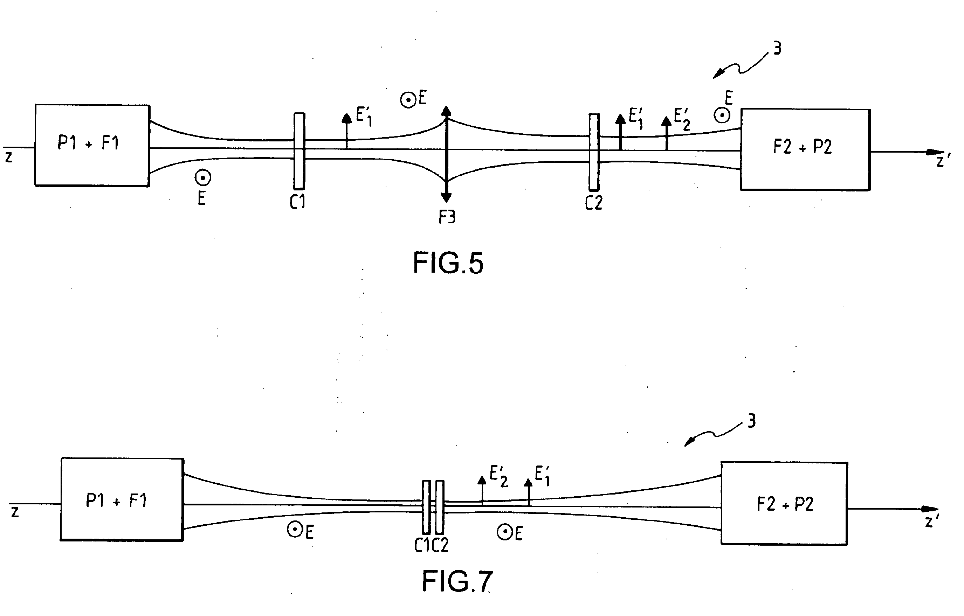

Selon une première variante représentée figure 5, un système optique d'imagerie F3 comme par exemple une lentille est disposée entre C1 et C2 ; et C2 est situé de manière à coïncider avec l'image de C1 formée par le système d'imagerie F3. De même que le cristal C1, le cristal C2 convertit une partie du champ incident E et transmet sans le convertir l'autre partie. Le champ E'₁ converti par C1 traverse C2 sans être converti et donc sans que ses propriétés temporelles et spatiales soient modifiées. C2 génère par ailleurs à partir de la partie du champ E non converti par C1, un champ E'₂ présentant les mêmes propriétés temporelles et spatiales que E'₁. On obtient finalement en sortie de C2, les interférences produites par E'₁ + E'₂ .

Une deuxième variante est basée sur l'autofocalisation dont on rappelle le principe. L'autofocalisation d'un matériau agit sur le profil spatial de l'impulsion dans ce matériau qui peut être assimilé à une lentille dont la focale varie avec l'intensité. Si on considère que le profil spatial d'une impulsion est gaussien, son intensité au centre est plus élevée qu'au bord. Or lorsque l'intensité est élevée, l'indice n du matériau varie avec l'intensité I et va donc être différent pour chaque point de l'impulsion. Le centre du faisceau rencontre un indice plus élevé et donc traverse le matériau à une vitesse plus faible (v=c/n). Par conséquence le front d'onde du faisceau va devenir progressivement plus courbe. Cette distorsion est identique à celle imposée par une lentille à gradient d'indice de focale positive fc (lentille de Kerr).

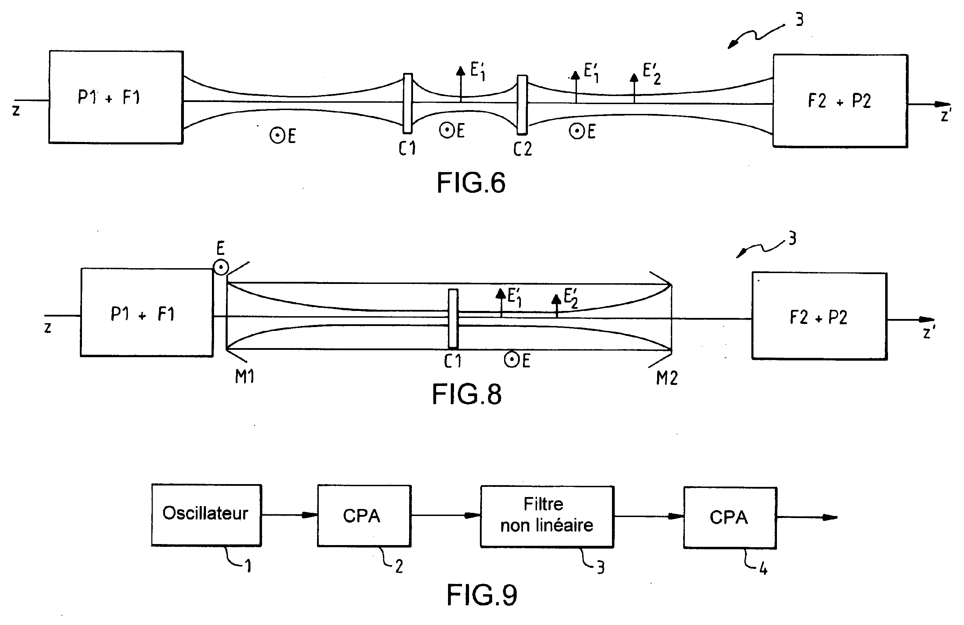

Selon ce principe, C1 se comporte aussi comme une lentille de Kerr de focale fc comme illustré figure 6, dans la mesure où certaines conditions sont respectées. C1 doit être placé en dehors du foyer du système de focalisation F1 mais près de celui-ci, c'est-à-dire à une distance f1+ ε de F1, f1 étant la focale de F1 et ε étant inférieur à 0.10 f1 mais non nul ; le nouveau système optique constitué du système de focalisation F1 et de la lentille de Kerr induite dans le cristal C1 et de focale fc permet de réaliser l'image de C1. C2 est positionné dans ce plan image.

Selon un deuxième mode de réalisation, représenté figure 7, le deuxième champ E'₂ est également généré par un deuxième cristal à géométrie cubique C2. C1 et C2 se situent tous les deux autour du foyer du système de focalisation F1, f1 étant la focale de F1 ; C1 et C2 sont proches l'un de l'autre, c'est-à-dire qu'ils sont séparés d'une distance inférieure à la distance de Rayleigh. De cette façon, le faisceau a les mêmes caractéristiques d'amplitude et phase spatiales sur les deux cristaux. II est alors inutile de faire l'image de l'un sur l'autre.

On rappelle que la distance de Rayleigh définit la distance sur laquelle le faisceau laser gaussien peut être considéré comme collimaté.

Ces premiers et deuxième modes de réalisation sont décrits avec deux cristaux C1 et C2. On peut de la même façon les réaliser avec plus de deux cristaux et ainsi obtenir autant de champs convertis E' que de cristaux pour produire des interférences contructives entre ces champs E'.

Selon un troisième mode de réalisation d'un filtre optique non linéaire 3, le deuxième champ E'₂ est obtenu avec le seul cristal C1 dans une configuration multipassages avec un ou plusieurs miroirs. Ce mode de réalisation est représenté figure 8 avec deux miroirs M1 et M2. Les miroirs M1 et M2 sont placés de manière à ce que l'image de C1 formée par ces miroirs coïncide avec C1. Lorsque par exemple M1 et M2 ont le même foyer, C1 est situé au foyer.

Le filtre optique non linéaire 3 selon l'invention est notamment utilisé pour réaliser un générateur d'impulsions laser ultra-intenses, ultra-brèves et à haut contraste temporel.

On va décrire un exemple d'un tel générateur en relation avec la figure 9. II comprend un oscillateur laser 1 apte à générer une impulsion femtoseconde de l'ordre du nanojoule. L'oscillateur est relié à un amplificateur 2 à dérive de fréquence ou « CPA » qui amplifie l'impulsion tout en générant une ASE et des impulsions parasites. Le CPA est donc relié à un filtre non linéaire 3 selon l'invention, pour débarasser l'impulsion de l'ASE et des impulsions parasites, sans que le cristal ne soit détérioré. L'impulsion nettoyée est alors amplifiée par un autre CPA 4.

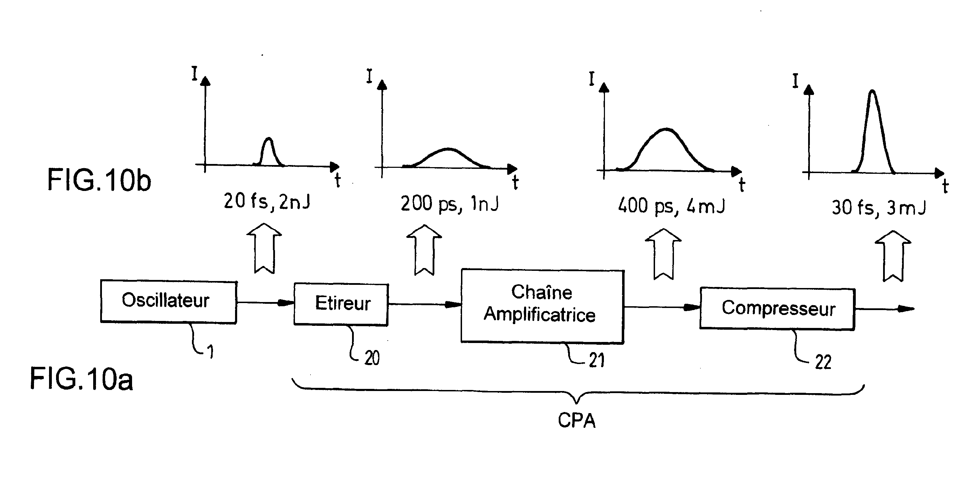

Un exemple de CPA est représenté figure 10a. Il comporte de manière classique un étireur temporel 20, une chaîne amplificatrice 21 majoritairement responsable de la formation d'ASE, et un compresseur 22. La chaîne amplificatrice 21 comprend par exemple un pré-amplificateur ou un ou deux amplificateurs de puissance. On a représenté figures 10b l'effet de chaque élément sur la courbe d'intensité de l'impulsion. Un exemple d'impulsion de 2 nanojoule (nJ) est générée par l'oscillateur 1 sur 20 femtosecondes (fs). Elle est étirée sur 200 picosecondes (ps) par l'étireur 20 en une impulsion d'1 nJ, puis amplifiée par la chaîne amplificatrice 21 pour obtenir une impulsion de 4 millijoule (mJ) sur 400 ps, et compressée par le compresseur 22, en une impulsion de 3 mJ sur 30 fs, comme illustré sur les courbes d'intensité figure 10b.

## Revendications

1. Filtre optique non linéaire (3) apte à transmettre une impulsion électromagnétique d'une durée inférieure à environ 1 picoseconde, pourvu de moyens (P1, F1) pour générer à partir de cette impulsion, un champ électromagnétique E à polarisation rectiligne, et d'un cristal C1 à géométrie cubique et à susceptibilité optique non linéaire d'ordre 3, apte à générer à partir de E, un champ électromagnétique E'₁ à polarisation rectiligne, orthogonale à celle de E, **caractérisé en ce qu'**il comprend des moyens pour générer au moins un autre champ électromagnétique E'₂ capable de produire des interférences constructives avec le champ électromagnétique E'₁.

2. Filtre selon la revendication précédente, **caractérisé en ce que** les moyens pour générer E'₂ comportent au moins un autre cristal C2 à géométrie cubique apte à recevoir en entrée le champ E'₁ et à générer en sortie le champ E'₂.

3. Filtre selon la revendication 2, **caractérisé en ce que** les moyens pour générer le champ E comportent un système optique de focalisation (F1) et **en ce que** les cristaux C1 et C2 sont situés dans la distance de Rayleigh du système optique de focalisation (F1).

4. Filtre selon la revendication 2, **caractérisé en ce qu'**il comprend en outre des moyens pour former une image de C1 et **en ce que** l'autre cristal C2 coïncide avec l'image du cristal C1.

5. Filtre selon la revendication précédente, **caractérisé en ce que** les moyens pour former l'image du cristal C1 comprennent un système optique de focalisation (F3) situé entre les deux cristaux C1 et C2.

6. Filtre selon la revendication 4, **caractérisé en ce que** les moyens pour générer un champ E comportent un système optique de focalisation (F1) et **en ce que** les moyens pour former l'image du cristal C1 incluent le système optique de focalisation (F1) et le cristal C1 apte à générer un phénomène d'autofocalisation de focale fc.

7. Filtre selon la revendication 1, **caractérisé en ce que** les moyens pour pour générer E'₂ comportent le cristal C1 et un système optique (M) apte à former l'image de C1 sur lui-même.

8. Générateur d'impulsions laser d'une durée inférieure à environ 1 picoseconde, équipé d'un oscillateur (1), **caractérisé en ce qu'**il comprend un filtre non linéaire (3) selon l'une des revendications précédentes.

9. Générateur d'impulsions laser selon la revendication précédente, **caractérisé en ce qu'**il comprend au moins une chaîne amplificatrice (21).

10. Générateur d'impulsions laser selon la revendication précédente, **caractérisé en ce qu'**il comprend au moins un amplificateur à dérive de fréquence.

## Claims

1. Non-linear optical filter (3) capable of transmitting an electromagnetic pulse with a duration of less than about 1 picosecond, provided with means (P1, F1) for generating an electromagnetic field E with a linear polarization from this pulse, and with a crystal C1 of cubic geometry having a 3^{rd} order non-linear optical susceptibility, capable of generating an electromagnetic field E'₁ from E with a linear polarization orthogonal to that of E, **characterized in that** it comprises means for generating at least one other electromagnetic field E'₂ capable of producing constructive interferences with the electromagnetic field E'₁.

2. Filter according to the preceding claim, **characterized in that** the means for generating E'₂ comprise at least one other crystal C2 of cubic geometry, capable of receiving the field E'₁ at the entry and of generating the field E'₂ at the exit.

3. Filter according to Claim 2, **characterized in that** the means for generating the field E comprise an optical focusing system (F1), and **in that** the two crystals C1 and C2 lie at the Rayleigh distance from the optical focusing system (F1).

4. Filter according to Claim 2, **characterized in that** it furthermore comprises means for forming an image of C1, and **in that** the other crystal C2 coincides with the image of the crystal C1.

5. Filter according to the preceding claim, **characterized in that** the means for forming the image of the crystal C1 comprise an optical focusing system (F3) lying between the two crystals C1 and C2.

6. Filter according to Claim 4, **characterized in that** the means for generating the field E comprise an optical focusing system (F1), and **in that** the means for forming the image of the crystal C1 include the optical focusing system (F1) and the crystal C1 capable of generating a self-focusing phenomenon of focal length fc.

7. Filter according to Claim 1, **characterized in that** the means for generating E'₂ comprise the crystal C1 and an optical system (M) capable of forming the image of C1 on itself.

8. Generator of laser pulses with a duration of less than about 1 picosecond, equipped with an oscillator (1), **characterized in that** it comprises a non-linear filter (3) according to one of the preceding claims.

9. Laser pulse generator according to the preceding claim, **characterized in that** it comprises at least one amplifier chain (21).

10. Laser pulse generator according to the preceding claim, **characterized in that** it comprises at least one chirped pulse amplifier.

## Patentansprüche

1. Nichtlinearer optischer Filter (3), der dazu geeignet ist, einen elektromagnetischen Impuls von einer Dauer von weniger als ungefähr 1 Pikosekunde zu übertragen, der versehen ist mit Mitteln (P1, F1), um ausgehend von diesem Impuls ein elektromagnetisches Feld E mit Linearpolarisation zu erzeugen, und mit einem Kristall C1 kubischer Geometrie und nichtlinearer optischer Suszeptibilität dritter Ordnung, der dazu geeignet ist, ausgehend von E ein elektromagnetisches Feld E'₁ mit einer Linearpolarisation, die zu derjenigen von E orthogonal ist, zu erzeugen, **dadurch gekennzeichnet, dass** er Mittel umfasst, um mindestens ein anderes elektromagnetisches Feld E'₂ zu erzeugen, das in der Lage ist, konstruktive Interferenzen mit dem elektromagnetischen Feld E'₁ hervorzubringen.

2. Filter nach dem vorhergehenden Anspruch, **dadurch gekennzeichnet, dass** die Mittel zum erzeugen von E'₂ mindestens einen anderen Kristall C2 kubischer Geometrie umfassen, der dazu geeignet ist, eingangs das Feld E'₁ zu empfangen und ausgangs das Feld E'₂ zu erzeugen.

3. Filter nach Anspruch 2, **dadurch gekennzeichnet, dass** die Mittel zum Erzeugen des Feldes E ein optisches Fokussiersystem (F1) umfassen, und dass die Kristalle C1 und C2 sich in der Rayleigh-Entfernung des optischen Fokussiersystems (F1) befinden.

4. Filter nach Anspruch 2, **dadurch gekennzeichnet, dass** es ferner Mittel umfasst, um C1 abzubilden, und dass der andere Kristall C2 mit dem Bild des Kristalls C1 übereinstimmt.

5. Filter nach dem vorhergehenden Anspruch, **dadurch gekennzeichnet, dass** die Mittel zum Abbilden des Kristalls C1 ein optisches Fokussiersystem (F3) umfassen, das sich zwischen den beiden Kristallen C1 und C2 befindet.

6. Filter nach Anspruch 4, **dadurch gekennzeichnet, dass** die Mittel zum Erzeugen eines Feldes E ein optisches Fokussiersystem (F1) umfassen, und dass die Mittel zum Abbilden des Kristalls C1 das optische Fokussiersystem (F1) und den Kristall C1, der dazu geeignet ist, ein Autofokussierphänomen der Brennweite fc zu erzeugen, umfassen.

7. Filter nach Anspruch 1, **dadurch gekennzeichnet, dass** die Mittel zum Erzeugen von E'₂ den Kristall C1 und ein optisches System (M), das dazu geeignet ist, C1 auf sich selber abzubilden, umfassen.

8. Generator von Laserimpulsen einer Dauer von weniger als ungefähr 1 Pikosekunde, ausgestattet mit einem Schwingkreis (1), **dadurch gekennzeichnet, dass** er einen nichtlinearen Filter (3) nach einem der vorhergehenden Ansprüche umfasst.

9. Laserimpulsgenerator nach dem vorhergehenden Anspruch, **dadurch gekennzeichnet, dass** er mindestens eine Verstärkerkette (21) umfasst.

10. Laserimpulsgenerator nach dem vorhergehenden Anspruch, **dadurch gekennzeichnet, dass** er mindestens einen Verstärker mit Frequenzverschiebung umfasst.
